# EUROPÄISCHE PATENTSCHRIFT

(11) **EP 0 694 019 B1**
(45) Veröffentlichungstag und Bekanntmachung des Hinweises auf die Patenterteilung: **21.05.1997**
(21) Anmeldenummer: 95908214.0
(22) Anmeldetag: 28.01.1995
(51) Int. Cl.: B65G 45/12, B30B 5/04, B30B 9/24

(54) **VORRICHTUNG ZUM ABLÖSEN EINES PRODUKTES VON EINEM ENDLOS UMLAUFENDEN BAND**
DEVICE FOR RELEASING A PRODUCT FROM A CONTINUOUSLY CIRCULATING BELT
DISPOSITIF POUR SEPARER UN PRODUIT D'UNE BANDE DEFILANT EN CONTINU

(30) Priorität: 18.02.1994 DE 4405197
(43) Veröffentlichungstag der Anmeldung: 31.01.1996
(73) Patentinhaber: Santrade Ltd., CH-6002 Luzern (CH)
(72) Erfinder: KLEINHANS, Matthias, D-71336 Waiblingen (DE); HEINISCH, Eckhard, D-71563 Affalterbach (DE)
(74) Vertreter: Wilhelm & Dauster Patentanwälte European Patent Attorneys
(86) Internationale Anmeldenummer: EP9500302
(87) Internationale Veröffentlichungsnummer: WO9522498

(56) Entgegenhaltungen:
- DE-C- 844 880
- GB-A- 768 202

## Beschreibung

Die Erfindung betrifft eine Vorrichtung zum Ablösen eines Produktes von einem endlos umlaufenden Band eines Bandförderers oder einer Doppelbandanlage, insbesondere einer Doppelbandpresse, im Bereich einer das Band umlenkenden Auslauftrommel, die um eine horizontale Drehachse in zwei gegenüberliegenden seitlichen Lagerschlitten drehbar gelagert und durch eine Linearbewegung von wenigstens einem der beiden Lagerschlitten in einer horizontalen Ebene schwenkbar ist, mit einem Ablösemesser, das sich quer zur Laufrichtung über die Breite des Bandes erstreckt und dessen Schneide zum Ablösen des Produktes schräg gegen die Bandoberfläche gerichtet ist. Eine solche Vorrichtung ist aus DE-C-844880 vorbekannt.

Es ist bekannt, auf einem Band eines Bandförderers oder einer Doppelbandanlage geförderte Produkte im Bereich einer Auslauftrommel von dem endlos umlaufenden Band mit Hilfe eines Ablösemessers abzulösen. Um eine gleichmäßige und sichere Ablösung der Produkte vom Band über seine gesamte Breite zu erreichen, muß die Schneide des Ablösemessers über ihre gesamte Breite gleichmäßig an der Bandoberfläche anliegen, d.h. parallel geführt sein. Dies führt bei Bändern, die durch eine Verschwenkung der Auslauftrommel in einer Horizontalebene um eine vertikale Schwenkachse quer zu ihrer Laufrichtung verlagerbar sind, zu Problemen, da sich bei einer Verschwenkung der Auslauftrommel der Abstand der Schneide des Ablösemessers über die Breite des Bandes zur Oberfläche des um die Auslauftrommel herumgelenkten Bandes ändert.

Aufgabe der Erfindung ist es, eine Vorrichtung der eingangs genannten Art zu schaffen, die auch bei einer Querverlagerung des Bandes auf der Auslauftrommel eine gleichmäßige Ablösung des Produktes über seine gesamte Breite gewährleistet.

Diese Aufgabe wird dadurch gelöst, daß das Ablösemesser im Bereich seiner gegenüberliegenden Stirnseiten in je einem starr an den korrespondierenden Lagerschlitten für die Auslauftrommel gekoppelten Führungsschlitten gehalten ist, der Linearführungsmittel für eine Linearbeweglichkeit des Ablösemessers in seiner Längsrichtung, ein Pendellager für eine parallele Ausrichtung des Ablösemessers zur jeweiligen Schwenklage der Drehachse der Auslauftrommel sowie Steuermittel für eine Längsbewegung des Ablösemessers abhängig von einer durch eine Schwenklage der Auslauftrommel verursachten Querverlagerung des Bandes aufweist. Dadurch ist das Ablösemesser an die Schwenkbewegungen der Auslauftrommel und damit an die Querverlagerung des Bandes gekoppelt. Durch die seitliche Führung und Lagerung des Ablösemessers wird gewährleistet, daß sich seine Schneide immer parallel zur Drehachse der Auslauftrommel und damit immer in gleichmäßigem Abstand zur Oberfläche des Bandes befindet, so daß das Produkt auch bei einer Schrägstellung der Auslauftrommel gleichmäßig von dem Band abgeschält wird. Das Ablösemesser macht daher die Bewegung der Auslauftrommel und die Querbewegung des Bandes mit. Durch die Linearbeweglichkeit des Ablösemessers und die Steuermittel wird der Längenausgleich für die Querlagerung des Ablösemessers relativ zum Band bewirkt, so daß sich das Ablösemesser immer auf gleicher Höhe relativ zum Band befindet. Dadurch wird gewährleistet, daß das Ablösemesser immer mittig zum Band ausgerichtet ist, wodurch eine gleichmäßige Ablösung des Produktes über seine gesamte Breite erzielbar ist.

In Ausgestaltung der Erfindung sind die Linearführungsmittel und das Pendellager zu einer kompakten Baueinheit kombiniert. Dadurch ergibt sich eine kompakte Ausführung der Lagerung des Ablösemessers in den seitlichen Führungsschlitten.

In weiterer Ausgestaltung der Erfindung ist als Linearführungsmittel ein eine Lagerwelle des Ablösemessers führendes Wälzlager vorgesehen. In weiterer Ausgestaltung ist das Pendellager koaxial um das Wälzlager herum angeordnet. Dadurch ist das Wälzlager zur Linearführung des Ablösemessers innerhalb des Pendellagers angeordnet, wodurch sich eine relativ geringe Baubreite der Lagerung des Ablösemessers ergibt.

In weiterer Ausgestaltung der Erfindung weist die kompakte Baueinheit ein die Lagerwelle des Ablösemessers lagerndes Pendelrollenlager auf. Dieses Pendelrollenlager übernimmt somit sowohl die Linearführung als auch die Schwenkbeweglichkeit des Ablösemessers. Selbstverständlich ist die Lagerwelle des Ablösemessers so lang ausgebildet, daß sie bei einer Längsverschiebung entlang der Bandoberfläche nicht aus dem Pendelrollenlager herausgleitet.

In weiterer Ausgestaltung der Erfindung ist dem Ablösemesser ein Antrieb zum oszillierenden Bewegen des Ablösemessers parallel zur Drehachse der Auslauftrommel zugeordnet. Dadurch wird eine in schneller Abfolge hin- und hergehende Schneidbewegung des Ablösemessers erzielt, die ein verbessertes Ablösen des Produktes von dem Band zur Folge hat. In einfacher Weise greift der Antrieb an einer der beiden Lagerwellen des Ablösemessers an.

In weiterer Ausgestaltung der Erfindung entspricht die Breite des Ablösemessers dem Abstand zweier auf dem Band angebrachter umlaufender Stauleisten zueinander, und das Ablösemesser ist zwischen den beiden Stauleisten parallel zur Drehachse der Auslauftrommel geführt. Dadurch wird das Ablösemesser automatisch mit einer Querverlagerung des Bandes passiv mitbewegt, da es zwischen den beiden Stauleisten angeordnet ist. Die Stauleisten sind daher Steuermittel für die Längsbewegung des Ablösemessers.

Weitere Vorteile und Merkmale der Erfindung ergeben sich aus den Unteransprüchen sowie aus der nachfolgenden Beschreibung von Ausführungsbeispielen der Erfindung, die anhand der Zeichnungen dargestellt sind.
- Fig. 1: zeigt schematisch in einer Seitenansicht eine Ausführungsform einer erfindungsgemäßen Ablösevorrichtung, die im Bereich einer Auslauftrommel eines unteren Bandes einer Doppelbandanlage angeordnet ist und ein Ablösemesser aufweist,
- Fig. 2: eine Draufsicht auf das untere Band und die Ablösevorrichtung im Bereich der Auslauftrommel, ebenfalls als schematische Darstellung,
- Fig. 3: einen detaillierten Schnitt durch die seitliche Lagerung des Ablösemessers der Ablösevorrichtung nach den Fig. 1 und 2 im Bereich eines Führungsschlittens, wobei das Ablösemesser quer zur Laufrichtung des Bandes beweglich und schwenkbar angeordnet ist, und
- Fig. 4: schematisch eine Draufsicht auf eine andere Ausführungsform einer erfindungsgemäßen Ablösevorrichtung ähnlich Fig. 2, bei der das Ablösemesser passiv zwischen zwei auf dem Band angeordneten Stauleisten bei einer Querverlagerung des Bandes mitbewegt wird.

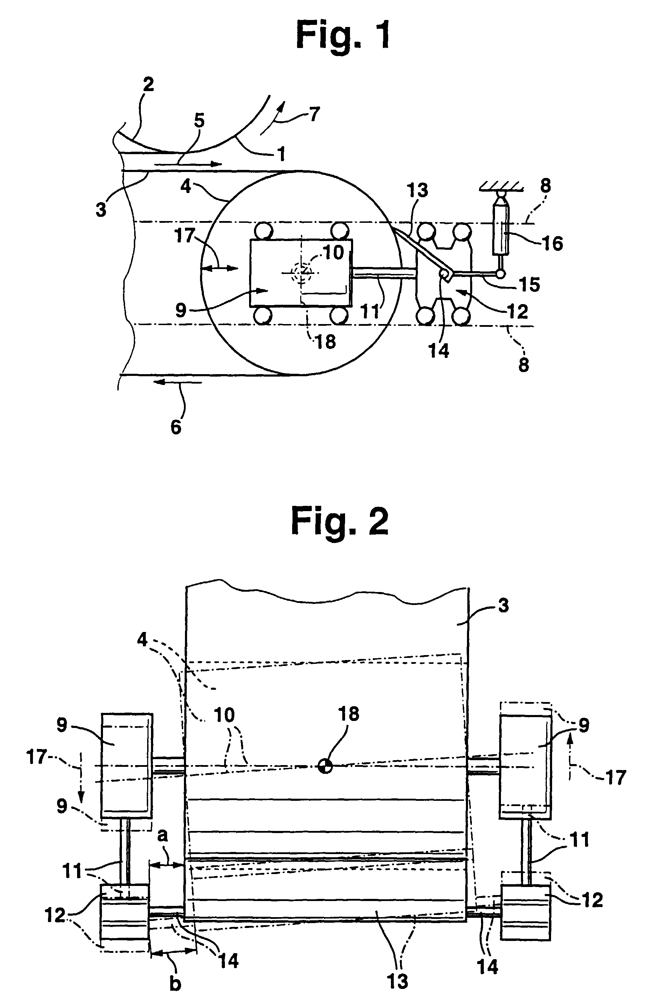

Eine Ablösevorrichtung nach Fig. 1 dient zum Ablösen eines in einer Doppelbandpresse behandelten Produktes von einem unteren Band (3) der Doppelbandpresse. Bei einer nicht dargestellten Ausführung der Erfindung wird die Ablösevorrichtung nach den Fig. 1 bis 3 bei einem lediglich ein umlaufendes Band aufweisenden Bandförderer, beispielsweise einem Bandkühler, eingesetzt. An dem prinzipiellen Aufbau der Ablösevorrichtung ändert sich dadurch nichts. Die Doppelbandpresse weist in an sich bekannter Weise ein oberes Band (1) auf, das um zwei Trommeln in Richtung des Pfeiles (7) endlos umläuft, von denen eine eine in Fig. 1 angedeutete Auslauftrommel (2) im Bereich des Auslaufes der Doppelbandpresse darstellt. Parallel zu dem oberen Band (1) ist ein unteres Band (3) um zwei Trommeln endlos umgelenkt, von denen die - in Laufrichtung (5) des Produktes gesehen - hintere Trommel eine Auslauftrommel (4) darstellt. Die beiden einander zugewandten Trums der Bänder (1 und 3) bilden zwischen sich einen Preßspalt für das zu behandelnde Produkt. Das untere Band (3) ist in Laufrichtung (5) über das obere Band (1) hinausgezogen, so daß das fertig behandelte Produkt nach dem Auslauf aus dem Preßraum auf dem unteren Band (3) weitergefördert wird. Die Bänder (1 und 3) stellen in an sich bekannter Weise Stahlbänder dar. Das untere Band (3) läuft in Richtung des Pfeiles (6) um. Die Auslauftrommel (4) ist zu beiden Seiten in je einen Lagerschlitten (9) drehbar gelagert. Auf jeder Seite der Auslauftrommel (4) sind für jeden Lagerschlitten (9) Führungsschienen (8) vorgesehen, die parallel zur Laufrichtung (5) des Bandes verlaufen. Die Führungsschienen (8) stützen jeden Lagerschlitten (9) von oben und von unten, so daß jeder Lagerschlitten (9) parallel zur Laufrichtung (5) des Bandes (3) in Richtung des Doppelpfeiles (17) linearbeweglich gelagert ist. Dazu sind Rollen sowohl an der Oberseite als auch an der Unterseite jedes Lagerschlittens (9) vorgesehen.

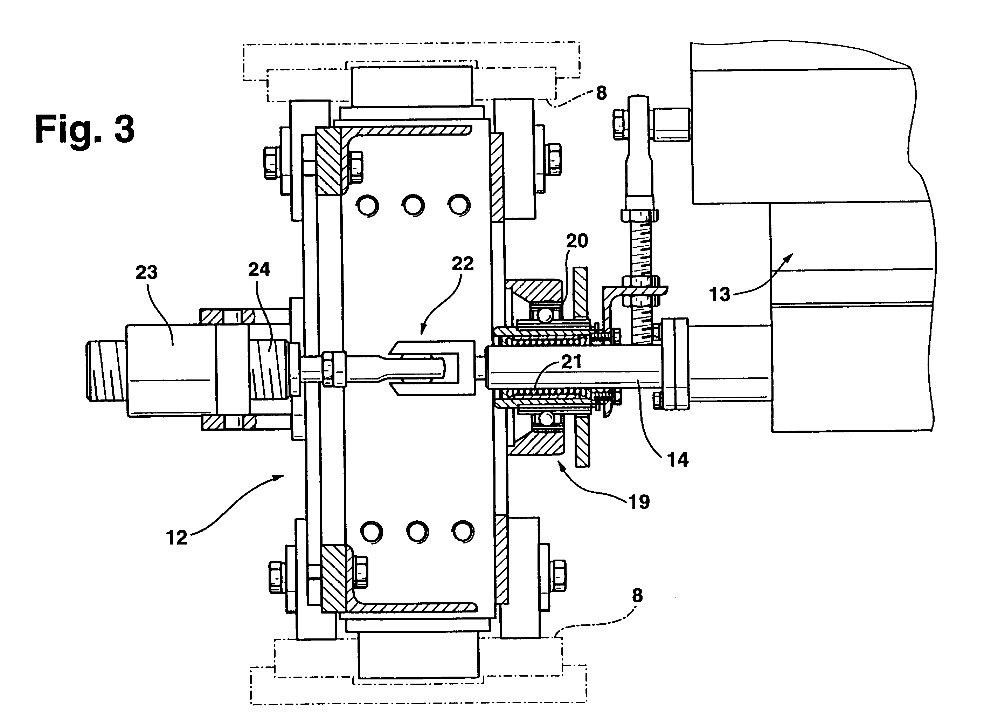

Die Ablösevorrichtung zum Ablösen des Produktes von dem unteren Band (3) weist ein Ablösemesser (13) auf, das entgegen der Laufrichtung (5) des Produktes gegen die Oberfläche des Bandes (3) etwa auf Höhe der oberen Führungsschiene (8) gerichtet ist. Das Ablösemesser (13) erstreckt sich über die gesamte Breite des Bandes (3) und streift oder schält das Produkt von dem Band (3) ab, wodurch das Produkt über die Oberseite des Ablösemessers (13) gleitet und in geeigneter Weise dem nächsten Bearbeitungsschritt zugeführt wird. Das Ablösemesser (13) entspricht der Breite des Bandes (3) und ist plattenartig ausgebildet. An den beiden gegenüberliegenden Stirnseiten ist das Ablösemesser (13) mittels jeweils einer Lagerwelle (14) in je einem seitlichen Führungsschlitten (12) gehalten (Fig. 2 und 3). Jede Lagerwelle (14) ist starr mit dem Ablösemesser (13) verbunden. Um den Anpreßdruck des Ablösemessers (13) an die Oberfläche des Bandes (3) ändern und ggf. das Ablösemesser (13) von dieser Oberfläche abheben zu können, ist an dem Ablösemesser (13) ein Hebel (15) starr angeordnet, mittels dessen das Ablösemesser (13) um eine durch die Mittellängsachse der beiden Lagerwellen (14) gebildete Schwenkachse in dem Führungsschlitten (12) schwenkbar ist. Diese Schwenkachse ist parallel zur Drehachse (10) der Auslauftrommel (4), die wiederum quer zur Laufrichtung (5) des Bandes (3) verläuft. Um die Abhebe- oder Anpreßbewegung des Ablösemessers (13) relativ zum Band (3) automatisch steuern zu können, greift an dem Hebel (15) ein ortsfest angeordneter Hubzylinder (16) an.

Jeder Führungsschlitten (12) ist mittels einer Verbindungsstange (11) starr mit dem korrespondierenden Lagerschlitten (9) der Auslauftrommel (4) verbunden. Jeder Führungsschlitten (12) weist zudem analog zum Lagerschlitten (9) an seiner Ober- und an seiner Unterseite Führungsrollen auf, mittels dessen er zwischen den Führungsschienen (8) abhängig von einer Bewegung des Lagerschlittens (9) in Richtung der Pfeile (17) linear beweglich ist. Durch eine Linearbewegung der Lagerschlitten (9) in Richtung der Pfeile (17) soll eine Verschwenkung und damit eine Schrägstellung der Auslauftrommel (4) in einer Horizontalebene erreicht werden, wodurch sich aufgrund der Drehbewegung der Auslauftrommel (4) zwangsläufig eine Verlagerung des unteren Bandes (3) auf der Auslauftrommel (4) quer zur Laufrichtung (5) ergibt. Die Schrägstellung der Auslauftrommel (4) erfolgt durch eine Linearbewegung von einem der beiden Lagerschlitten (9) unabhängig von dem gegenüberliegenden Lagerschlitten (9), oder durch eine gegenläufige Linearbewegung der gegenüberliegenden Lagerschlitten (9) mit unterschiedlichen Beträgen oder schließlich durch eine entsprechend gegenläufige Bewegung der gegenüberliegenden Lagerschlitten (9) um gleiche Beträge, wodurch sich eine Verschwenkung der Auslauftrommel (4) um eine vertikale Mittelachse (18) ergibt. Bei den übrigen, möglichen Linearbewegungen der Lagerschlitten erfolgt ebenfalls eine Verschwenkung der Auslauftrommel (4) um eine vertikale Schwenkachse, die jedoch nicht mittig, sondern seitlich versetzt ist. Im Extremfall, bei dem lediglich ein Lagerschlitten bewegt wird, verläuft die geometrische Schwenkachse durch einen der seitlichen Lagerschlitten. Die Bewegung der Lagerschlitten (9) und damit auch die Verschwenkung der Auslauftrommel (4) wird durch geeignete Steuerantriebe vorgerufen, die an den beiden Lagerschlitten (9) angreifen. Die Lagerungen der Welle der Auslauftrommel (4) in den beiden Lagerschlitten (9) ist als Pendellagerung ausgeführt, um eine gewisse Schrägstellung der Welle zu ermöglichen. In Fig. 2 ist eine solche Schrägstellung der Auslauftrommel (4) dargestellt, wobei die Darstellung zur Verdeutlichung etwas übertrieben ist. Eine ausreichende Querverlagerung des Bandes (3) wird in der Praxis bereits durch geringe Schrägstellungen der Drehachse (10) der Auslauftrommel (4) erreicht.

Die Schneide des Ablösemessers (13) ist während des Ablösevorganges über die gesamte Breite des Bandes (3) mit gleichmäßigem Anpreßdruck gegen die Oberfläche des Bandes (3) gepreßt. Da jeder Führungsschlitten (12) zur seitlichen Lagerung des Ablösemessers (13) starr an den zugehörigen Lagerschlitten (9) der Auslauftrommel (4) gekoppelt ist, ergibt sich bei einer Schrägstellung der Auslauftrommel (4) zwangsläufig auch eine korrespondierende Schrägstellung des Ablösemessers (13), wodurch die Schneide des Ablösemessers (13) immer parallel zur Drehachse (10) der Auslauftrommel (4) und damit auch zur Oberfläche des Bandes (3) ausgerichtet bleibt. Wie Fig. 2 verdeutlicht, müssen die seitlichen Lagerungen für die beiden Lagerwellen (14) des Ablösemessers (13) in den Führungsschlitten (12) jedoch jeweils mit einem Längenausgleich versehen sein. Bei lotrechter Ausrichtung der Drehachse (10) befindet sich nämlich zwischen der seitlichen Stirnkante des Ablösemessers (13) und einer Innenseite des Führungsschlittens (12) ein Abstand mit dem Maß (a), bei einer Schrägstellung der Drehachse (10) jedoch ein Abstand mit dem vergrößerten Maß (b). Entsprechend ist der Abstand auf der gegenüberliegenden Seite verkürzt. Die beiden gegenüberliegenden Lagerwellen (14) des Ablösemessers (13) sind ausreichend lang bemessen, um die entsprechend der maximalen Verschwenkbarkeit der Drehachse (10) auftretenden maximalen Längenunterschiede auszugleichen.

In Fig. 3 ist eine Ausführung einer seitlichen Lagerung (19) der Lagerwelle (14) im Führungsschlitten (12) detailliert dargestellt. Um eine Schwenkbeweglichkeit der Lagerwelle (14) relativ zu dem lediglich in Längsrichtung des Bandes (3) linear beweglichen Führungsschlitten (12) zuzulassen, ist die Lagerwelle (14) mittels eines Pendellagers (20), das als Kugellager ausgebildet ist, an dem Führungsschlitten gelagert. Um zusätzlich auch eine Linearbeweglichkeit des Ablösemessers (13) jeweils parallel zur Drehachse (10) der Auslauftrommel (4) unabhängig von ihrer Schrägstellung zu ermöglichen, ist die Lagerwelle (14) zusätzlich durch ein Rollenlager (21) axial beweglich gehalten. Dadurch ist es möglich, das Ablösemesser (13) durch eine Längsverschiebung quer zur Laufrichtung des Bandes (3) immer mittig zum Band (3) zu zentrieren, so daß die seitlichen Kanten des Ablösemessers (13) immer mit den seitlichen Kanten des Bandes (3) abschließen. Die seitliche Lagerung (19) stellt eine Kombination aus dem Pendellager (20) und dem Rollenlager (21) dar, wodurch die Doppelfunktion der schwenkbaren und der axial beweglichen Lagerung erreicht wird. Die Lagerung (19) stellt eine kompakte Baueinheit dar, da das Rollenlager (21) koaxial zum Pendellager (20) innerhalb des Pendellagers (20) angeordnet ist.

Durch diese kompakte Bauweise, wie sie sich aus Fig. 3 ergibt, weist die Lagerung (19) lediglich eine geringe Baubreite auf.

Beim dargestellten Ausführungsbeispiel nach Fig. 3 wird die Längsverschiebung des Ablösemessers (13) parallel zur Drehachse (10) der Auslauftrommel (4) durch einen Linearantrieb (23, 24) gesteuert, der in Verlängerung der Lagerwelle (14) an der freien Stirnseite der Lagerwelle (14) angreift. Dieser Linearantrieb (23, 24) ist mit der Steuerung der Längsbewegung der Lagerschlitten (9) gekoppelt und von einer zentralen Steuereinheit kontrolliert. Zur Übertragung des Antriebs von einer Antriebswelle (24) auf die Lagerwelle (14) ist eine Kreuzgelenkkupplung (22) vorgesehen, die auch bei einer Schrägstellung der Lagerwelle (14) eine Axialverschiebung auf die Lagerwelle (14) überträgt. Mittels des Linearantriebes (23, 24) ist es zusätzlich möglich, die Längsbewegung der Lagerwelle (14) und damit des Ablösemessers (13) als oszillierende Bewegung durchzuführen, wodurch sich eine verbesserte Schneidwirkung für das Ablösemesser (13) ergibt.

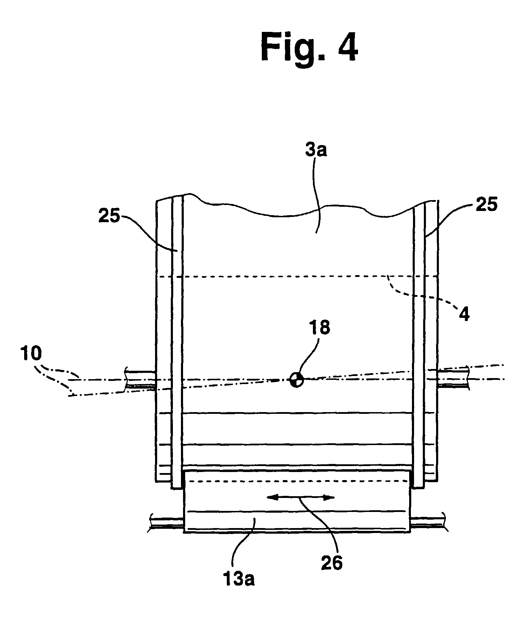

Die seitliche Lagerung des Ablösemessers (13a) nach Fig. 4 entspricht im wesentlichen der dargestellten Ausführung nach Fig. 3. Bei dieser Ausführung ist das Ablösemesser (13a) jedoch nicht mit einem Linearantrieb für eine Längsbewegung des Ablösemessers (13a) quer zur Laufrichtung des Bandes (3a) versehen. Das Ablösemesser (13a) wird vielmehr lediglich passiv in Richtung des Doppelpfeiles (26) mitbewegt, indem es zwischen zwei Stauleisten (25) des Bandes (3a) angeordnet ist. Die Stauleisten (25) ragen lotrecht von der Oberfläche des Bandes (3a) ab und sind starr auf dem Band (3a) angeordnet. Sie bilden die seitliche Produktbegrenzung während der Förderung auf dem Band (3a). Bei einer Schrägstellung der Auslauftrommel (4) - angedeutet durch die strichpunktierte Drehachse (10) - um eine vertikale Schwenkachse (18) erfolgt zwangsläufig eine Querverlagerung des Bandes (3a). Das entsprechend schwenk- und linearbeweglich gelagerte Ablösemesser (13a) wird bei einer Verlagerung des Bandes (3a) passiv mitgeführt, indem es je nach Schrägstellung der Auslauftrommel (4) an einer der beiden Stauleisten (25) zur Anlage kommt und von dieser in die jeweilige Richtung gedrückt wird. Durch die seitliche Stützung der beiden Stauleisten (25) bleibt das Ablösemesser (13a) daher in jeder Schwenkstellung der Auslauftrommel (4) immer mittig zum Band (3a) zentriert.

## Patentansprüche

1. Vorrichtung zum Ablösen eines Produktes von einem endlos umlaufenden Band (3) eines Bandförderers oder einer Doppelbandanlage, insbesondere einer Doppelbandpresse, im Bereich einer das Band umlenkenden Auslauftrommel (4), die um eine horizontale Drehachse in zwei gegenüberliegenden seitlichen Lagerschlitten (9) drehbar gelagert und durch eine Linearbewegung von wenigstens einem der beiden Lagerschlitten in einer horizontalen Ebene schwenkbar ist, mit einem Ablösemesser (13, 13a), das sich quer zur Laufrichtung über die Breite des Bandes erstreckt und dessen Schneide zum Ablösen des Produktes schräg gegen die Bandoberfläche gerichtet ist, dadurch gekennzeichnet, daß das Ablösemesser (13, 13a) im Bereich seiner gegenüberliegenden Stirnseiten in je einem starr an den korrespondierenden Lagerschlitten (9) für die Auslauftrommel (4) gekoppelten Führungsschlitten (12) gehalten ist, der Linearführungsmittel (21) für eine Linearbeweglichkeit des Ablösemessers (13, 13a) in seiner Längsrichtung, ein Pendellager (20) für eine parallele Ausrichtung des Ablösemessers (13, 13a) zur jeweiligen Schwenklage der Drehachse (10) der Auslauftrommel (4), sowie Steuermittel (23, 24; 25) für eine Längsbewegung des Ablösemessers (13, 13a) abhängig von einer durch eine Schwenklage der Auslauftrommel (4) verursachten Querverlagerung des Bandes aufweist.

2. Vorrichtung nach Anspruch 1, dadurch gekennzeichnet, daß die Linearführungsmittel (21) und das Pendellager (20) zu einer kompakten Baueinheit kombiniert sind.

3. Vorrichtung nach Anspruch 2, dadurch gekennzeichnet, daß als Linearführungsmittel ein eine Lagerwelle (14) des Ablösemessers (13, 13a) führendes Wälzlager (21) vorgesehen ist.

4. Vorrichtung nach Anspruch 3, dadurch gekennzeichnet, daß das Pendellager (20) koaxial um das Wälzlager (21) herum angeordnet ist.

5. Vorrichtung nach Anspruch 4, dadurch gekennzeichnet, daß die kompakte Baueinheit ein die Lagerwelle (14) des Ablösemessers (13, 13a) lagerndes, kombiniertes Pendelrollenlager aufweist.

6. Vorrichtung nach einem der vorhergehenden Ansprüche, dadurch gekennzeichnet, daß dem Ablösemesser (13) ein Linearantrieb (23, 24) zum oszillierenden Bewegen des Ablösemessers (13) parallel zur Drehachse (10) der Auslauftrommel (4) zugeordnet ist.

7. Vorrichtung nach Anspruch 6, dadurch gekennzeichnet, daß der Linearantrieb (23, 24) an einer der beiden Lagerwellen (14) des Ablösemessers (13) angreift.

8. Vorrichtung nach einem der Ansprüche 1 bis 5, dadurch gekennzeichnet, daß die Breite des Ablösemessers (13a) dem Abstand zweier auf dem Band (3a) angebrachter umlaufender Stauleisten (25) zueinander entspricht, und daß das Ablösemesser (13a) zwischen den beiden Stauleisten (25) parallel zur Drehachse (10) der Auslauftrommel (4) geführt ist.

## Claims

1. An apparatus for detaching a product from an endlessly revolving belt (3) of a belt conveyor or of a double belt installation, particularly a double belt press, in the region of a delivery-end drum (4) which deflects the belt and which is mounted in two oppositely disposed lateral bearing carriages (9) and is rotatable about a horizontal axis, being adapted to pivot in a horizontal plane by a linear movement of at least one of the two bearing carriages, with a stripper blade (13, 13a) which extends crosswise to the direction of movement and over the width of the belt and of which the cutting edge is directed obliquely against the belt surface in order to strip off the product, characterised in that the stripper blade (13, 13a) is, in the region of its oppositely disposed ends, supported in each case in a guide carriage (12) rigidly coupled to the corresponding bearing carriage (9) for the delivery-end-drum (4), and in that for linear mobility of the stripper blade (13, 13a) in its longitudinal direction, the linear guide means (21) comprises a self-aligning bearing (20) for parallel alignment of the stripper blade (13, 13a) in respect of the pivoted position ofthe axis of rotation (10) of the delivery-end drum (4), and also control means (23, 24; 25) for a longitudinal movement of the stripper blade (13, 13a) as a function of a transverse displacement of the belt caused by a pivoted position of the delivery-end drum (4).

2. An apparatus according to claim 1, characterised in that the linear guide means (21) and the self-aligning bearing (20) are combined into one compact structural unit.

3. An apparatus according to claim 2, characterised in that a rolling-type bearing (21) is provided and, as the linear guide means, guides a bearing shaft (14) of the stripper blade (13, 13a).

4. An apparatus according to claim 3, characterised in that the self-aligning bearing (20) is disposed coaxially around the rolling-type bearing (21).

5. An apparatus according to claim 4, characterised in that the compact unit comprises a combined self-aligning rolling bearing mounting the bearing shaft (14) of the stripper blade (13, 13a).

6. An apparatus according to one of the preceding claims, characterised in that a linear drive (23, 24) for the oscillating movement of the stripper blade (13) parallel with the axis of rotation (10) of the delivery-end drum (4) is associated with the stripper blade (13).

7. An apparatus according to claim 6, characterised in that the linear drive (23, 24) engages one of the two bearing shafts (14) ofthe stripper blade (13).

8. An apparatus according to one of claims 1 to 5, characterised in that the width of the stripper blade (13a) corresponds to the distance between two rotating damming bars (25) mounted on the belt (3a) and in that the stripper blade (13a) is guided between the two damming bars (25) and parallel with the axis of rotation (10) of the delivery-end drum (4).

## Revendications

1. Dispositif pour détacher un produit d'une bande circulante sans fin (3) d'un convoyeur à bande ou d'une installation à deux bandes, notamment d'une presse à deux bandes, au niveau d'un tambour de sortie (4) qui réalise un renvoi de la bande, est monté de manière à pouvoir tourner autour d'un axe horizontal de rotation dans deux chariots de support latéraux opposés (9) et peut pivoter, sous l'effet d'un déplacement linéaire d'au moins l'un des deux chariots de support, dans un plan horizontal, et comportant un couteau de détachement (13, 13a) qui s'étend sur la largeur de la bande transversalement par rapport à la direction de circulation et dont le tranchant est dirigé, par rapport à la surface de la bande, de manière à détacher le produit obliquement, caractérisé en ce que le couteau de détachement (13, 13a) est retenu, au niveau de chacun de ses côtés frontaux opposés, dans un chariot de guidage respectif (12) qui est accouplé rigidement au chariot de support correspondant (9) pour le tambour de sortie (4) et comporte des moyens de guidage linéaire (21) pour une possibilité de déplacement linéaire du couteau de détachement (13,13a) dans sa direction longitudinale, un palier oscillant (20) pour un alignement du couteau de détachement (13, 13a) parallèlement à la position pivotée respective de l'axe de rotation (10) du tambour de sortie (4), ainsi que des moyens de commande (23,24; 25) pour un déplacement longitudinal du couteau de détachement (13,13a) en fonction d'un décalage transversal de la bande dû à une position pivotée du tambour de sortie (4).

2. Dispositif selon la revendication 1, caractérisé en ce que les moyens de guidage linéaire (21) et le palier oscillant (20) sont combinés pour former une unité de construction compacte.

3. Dispositif selon la revendication 2, caractérisé en ce qu'il est prévu, comme moyens de guidage linéaire, un roulement (21) qui guide un arbre de support (14) du couteau de détachement (13,13a).

4. Dispositif selon la revendication 3, caractérisé en ce que le palier oscillant (20) est disposé coaxialement autour du roulement (21).

5. Dispositif selon la revendication 4, caractérisé en ce que l'unité de construction compacte comporte un palier oscillant - roulement combiné, qui supporte l'arbre de support (14) du couteau de détachement (13,13a).

6. Dispositif selon l'une des revendications précédentes, caractérisé en ce qu'au couteau de détachement (13) est associé un dispositif d'entraînement linéaire (23,24) servant à réaliser un déplacement oscillatoire du couteau de détachement (13) parallèlement à l'axe de rotation (10) du tambour de sortie (4).

7. Dispositif selon la revendication 6, caractérisé en ce que le dispositif d'entraînement linéaire (23,24) est couplé à l'un des deux arbres de support (14) du couteau de détachement (13).

8. Dispositif selon l'une des revendications 1 à 5, caractérisé en ce que la largeur du couteau de détachement (13a) correspond à la distance entre deux réglettes de retenue circulantes (25) disposées sur la bande (3a), et que le couteau de détachement (13a) est guidé entre les deux réglettes de retenue (25) parallèlement à l'axe de rotation (10) du tambour de sortie (4).
